# EUROPÄISCHE PATENTSCHRIFT

(11) **EP 0 427 946 B1**
(45) Veröffentlichungstag und Bekanntmachung des Hinweises auf die Patenterteilung: **28.12.1994**
(21) Anmeldenummer: 90118911.8
(22) Anmeldetag: 03.10.1990
(51) Int. Cl.: B65D 5/42, B31B 1/60

(54) **Verpackung für fliessfähige Füllgüter mit aussen glatt ausgebildeter Siegelnaht, Verfahren zur Herstellung einer solchen Packung und Vorrichtung zur Durchführung dieses Verfahrens**
Package for flowable products with flat outer sealing joint, method for producing such package and apparatus for performing this method
Emballage pour produits coulables avec joint de soudure extérieurement lisse, procédé de fabrication d'un tel emballage et dispositif d'exécution de ce procédé

(30) Priorität: 13.11.1989 CH 4083/89
(43) Veröffentlichungstag der Anmeldung: 22.05.1991
(73) Patentinhaber: Tetra Laval Holdings & Finance SA, 1009 Pully (CH)
(72) Erfinder: Schweri, Benedikt, CH-1680 Romont (CH)
(74) Vertreter: Weber, Dieter, Dr.

(56) Entgegenhaltungen:
- EP-A- 0 006 259
- EP-A- 0 223 094
- FR-A- 1 011 798

## Beschreibung

Die Erfindung betrifft eine Verpackung für fließfähige Füllgüter, insbesondere Milch, Säfte oder dergleichen, bestehend aus Seitenwänden sowie Ober- und Unterwand als Deckel und Boden, wobei wenigstens eine Seitenwand und/oder Deckel und/oder Boden eine längs Rändern benachbarter Wandfelder verlaufende Siegelnaht aufweist. Ferner betrifft die Erfindung ein Verfahren und eine Vorrichtung zur Herstellung einer solchen Packung, wobei die Vorrichtung zwei relativ zueinander bewegbare Spritzbacken aufweist.

Für die Verpackung von Flüssigkeiten sind verschiedene Packungstypen bekannt, die im wesentlichen alle Seitenwände, Deckel und Boden haben und von denen einige eine Siegelnaht aufweisen, die längs Rändern benachbarter Wandfelder verlaufend vorgesehen ist. Das allgemeine Problem der Packungshersteller, bei denen Wandfelder mit einer Siegelnaht aus mit Kunststoff beschichtetem Papier vorgesehen sind, besteht in der Dichtigkeit der Siegelnaht, die im Falle von Flüssigkeitsverpackungen selbstverständlich flüssigkeitsdicht sein muß.

Weitere Anforderungen, die an Flüssigkeitspackungen gestellt werden, sind eine gute Distributionsmöglichkeit, wobei insbesondere die Stapelbarkeit zum Umverpacken gewünscht ist, und ein gutes Aussehen. Manche Arten von Flüssigkeitspackungen aus Papier sind nicht ohne Siegelnähte herstellbar, und zum guten Stapeln übereinander und/oder nebeneinander hat man Siegelnähte verschiedenster Techniken hergestellt und dann flach auf die Oberfläche umgelegt. Einerseits vom ästhetischen Standpunkt eines guten Aussehens und andererseits im Hinblick auf den Raumbedarf ist es erwünscht, Packungen mit glatten bzw. ebenen Wänden zu erhalten.

Mit Nachteil zeigen bekannte Verpackungen im Bereich einer Siegelnaht aber meistens einen Wulst, der nicht nur für den Betrachter ein ungünstiges Aussehen mit sich bringt, sondern auch bei der Handhabung oder maschinellen Behandlung fertiger Packungen stört.

Da es insbesondere bei Flüssigkeiten wichtig ist, Verbindungsnähte flüssigkeitsdicht und mechanisch fest auszugestalten, hat man Siegelnähte geschaffen, bei denen die Ränder benachbarter Wandfelder überlappend über einen gewissen Breitenbereich verschweißt werden, oder man hat Stumpfschweißränder geschaffen, bei denen die Endkanten benachbarter Ränder stirnseitig aneinanderstoßen und mit einem Kunststoffwulst miteinander versiegelt werden. Es ist ersichtlich, daß in beiden Fällen im Bereich der Siegelnaht scheinbar unvermeidlich auf der Oberfläche der Packung ein Wulst, im allgemeinen ein Spritzwulst aus Kunststoff und bei überlappend liegenden Rändern zusätzlich verdickt durch einen Rand vorgegeben ist. Nicht nur aus Gründen eines guten äußeren Erscheinungsbildes einer solchen Fließmittelpackung sondern auch zur besseren Handhabung, so daß Maschinenteile an den Wulsten nicht hängenbleiben oder die Packung durch ihre eigenen Siegelnähte nicht beschädigt wird, wäre es erwünscht, im Bereich vorgesehener Siegelnähte glatte Oberflächen zu haben.

Aus der EP-A-0.223.094 ist eine Verpackung der eingangs genannten Art bekannt. Dort wird der Tubus zwar durch überlappend aufeinandergelegte Ränder und durch Anordnen einer Längssiegelnaht gebildet, diese ist aber in herkömmlicher Weise mit einer Stufung nach außen erstellt und innen mit einem Abdeckstreifen als Kantenschutz versehen. Der Deckel hingegen ist durch umgefaltete Wandfelder gebildet, deren Ränder Stoß an Stoß nebeneinanderliegen, wobei schmale Spalte dazwischen belassen werden. In diese Spalte hinein werden Kunststoffbrücken eingesetzt. Bei solchen nur stirnseitig aneinanderstoßenden Wandfeldrändem leidet die Zugfestigkeit erheblich. Schon bei der Belassung sowohl des Außen- als auch des Innenwulstes der doppelt-T-förmig profilierten Kunststoffbrücke im Deckel ist die Zugbelastung der Gesamtwand (Deckel) so gering, daß man diese Art Verbindung nur im Deckel vorsieht, nicht bei der Längssiegelnaht des Tubus.

Es ist daher Aufgabe der vorliegenden Erfindung, eine Verpackung, ein Herstellungsverfahren und eine Vorrichtung zur Herstellung einer solchen Verpackung zu schaffen, die im Bereich von Siegelnähten eine glatte äußere Oberfläche vorgibt, ohne daß Wulste aus Kunststoff oder Papier überstehen, wobei aber doch eine ausreichende Zugfestigkeit gegeben ist und Insbesondere eine bessere Zugfestigkeit erreicht wird als dies bei Stumpfschweißrändern möglich ist, bei denen die Endkanten benachbarter Ränder stirnseitig aneinanderstoßen.

Hinsichtlich der Verpackung selbst wird diese Aufgabe erfindungsgemäß dadurch gelöst, daß die Siegelnaht durch überlappend liegende Ränder gebildet ist und die äußere Oberfläche der Wand mit der Siegelnaht glatt derart ausgebildet ist, daß die Oberflächen beider nebeneinanderliegender, durch die Siegelnaht miteinander verbundener Wandfelder über einen Spalt neben einer Endkante eines zu einem der Wandfelder gehörenden Randes hinweg im Querschnitt bündig ineinander übergehend angeordnet sind, daß eine Stufe durch die überlappenden Ränder im Bereich der Siegelnaht auf der Innenseite der Packung angeordnet ist, und daß die Siegelnaht auf der Innenseite der Packung von einem angespritzten Kunststoffwulst abgedeckt ist. Mit den vorstehend genannten Maßnahmen wird erreicht, daß die äußere Oberfläche der mit der Siegelnaht versehenen Wand der Verpackung glatt ausgebildet ist. Eine Siegelnaht soll zwei Ränder zweier benachbarter Wandfelder dicht miteinander verbinden, und deshalb ist auch bei außen glatt ausgebildeter Wandoberfläche der Packung ein Spalt unvermeidbar, der aber dann keineswegs mehr stört, wenn die Oberflächen beider Wandungen neben dem Spalt bündig zueinander liegen und die Oberflächen im Querschnitt stetig ineinander übergehen. Man kann sich nämlich gekrümmte oder ebene Oberflächen vorstellen, in denen die beschriebenen Siegelnähte angeordnet sind. Im Falle einer quaderförmigen Milchverpackung mit ebenen Wänden würde die Maßnahme gemäß der Erfindung bedeuten, daß die Oberfläche über den Spalt hinweg eben, glatt und ohne Stufe verläuft. Im Falle von gekrümmten Flächen, weiche die Siegelnaht überlaufen, bedeutet dies zwar auch, daß im Bereich der Siegelnaht keine Stufe vorhanden ist, die Oberfläche bleibt aber entweder stetig gekrümmt, oder die Krümmung ändert sich stetig. Jedenfalls wird erfindungsgemäß ein stufenartiger Sprung an der Siegelnaht mit Vorteil vermieden.

Zwar hat man bei überlappenden Rändern schon versucht, einen stufenfreien Übergang und damit eine glatte Oberfläche zu schaffen, dies ist bei bekannten Packungen aber nur durch teilweises Abfräsen des Packungsmaterials längs des Randes gelungen. Dieses auch "Skiving" genannte Randfräsverfahren ist aber aufwendig und kompliziert. Mit den erfindungsgemäßen Maßnahmen hingegen sind ähnliche Ergebnisse und auf der äußeren Oberfläche sogar gleiche Ergebnisse mit ganz einfachen Mitteln erreichbar, wie nachfolgend in Verbindung mit dem Verfahren noch beschrieben wird.

Die Siegelnaht nach der Erfindung ist durch überlappend liegende Ränder gebildet, und die äußere Oberfläche der Wand ist mit der Siegelnaht glatt derart ausgebildet, daß neben der Endkante des ersten äußeren überlappenden Randes der Siegelnaht die Wand neben dem anderen zweiten inneren Rand der Siegelnaht bündig auf derselben Höhe wie der erste äußere Rand angeordnet ist. Mit anderen Worten muß man sich zwei Papierwände (die mit Kunststoff jeweils auf beiden Oberflächen beschichtet sind) denken, die z.B. längs einer geraden (oder auch gleichmäßig gebogenen) Linie miteinander durch Überlappung verbunden werden sollen derart, daß der Betrachter schließlich die Überlappung von außen nicht erkennt, sondern eine einwandfrei glatte Oberfläche sieht, bei der allenfalls der oben beschriebene Spalt sichtbar ist. Dieser Spalt wird nämlich durch die Endkante des ersten äußeren überlappenden Randes gebildet. Die zu diesem ersten Rand gehörende Wand verläuft also aus ihrem Mittelbereich über den Rand bis zu dessen Endkante vollständig gleichmäßig und glatt. Für den Betrachter schließt sich danach der kaum sichtbare Spalt an, welcher längs der betrachteten inne bzw. parallel zur Siegelnaht verläuft, und zur anderen Wand hin schießt sich dann bündig auf derselben Höhe die zweite Papierwand an, die mit der ersten zu verbinden ist. Dabei ist die Verbindung über den genannten zweiten, inneren Rand geschaffen, welcher für den Betrachter der Packung von außen unsichtbar ist.

Durch die vorstehenden Maßnahmen wird also genau der erwünschte Zweck erreicht, eine Packung mit außen glatten Oberflächen zu schaffen, die gleichwohl flüssigkeitsdicht ist, durch die erfindungsgemäßen Maßnahmen aber gut stapelfähig, gut transportierbar und durch Handhabungstätigkeiten nicht ohne weiteres zu beschädigen ist, weil angreifende Finger oder dergleichen sich jedenfalls nicht an überstehenden Wulsten festhaken können. Außerdem ist eine bessere Zugfestigkeit gegeben als dies bei Stumpfschweißrändern möglich ist, bei denen die Endkanten benachbarter Ränder stirnseitig aneinanderstoßen.

Die äußere Oberfläche des äußeren überlappenden Randes der Siegelnaht geht stetig in die äußere Oberfläche des zu diesem Rand gehörenden Wandfeldes über, und der innere, zu dem anderen Wandfeld gehörende Rand umläuft die Endkante des äußeren Randes stufenförmig gebogen. Es wurde oben schon darauf hingewiesen, daß sich die neue Art Siegelnaht sowohl in gekrümmten als auch ebenen Flächen erstreben kann. Wenn die äußere Oberfläche der einen Wand stetig in die äußere Oberfläche der anderen Wand übergeht, kann erfindungsgemäß gleichwohl darunter eine Siegelnaht verlaufen und zwei benachbarte Wandungen verbinden, sei es, daß diese in einer oder mehreren Ebenen oder in gekrümmten Flächen verläuft. Insbesondere bei überlappenden Rändern weiß der Fachmann, daß die Überlappung eine Stufe bildet, die trotz hoher Preßdrücke bei der Herstellung einer Siegelnaht nicht gänzlich beseitigt werden kann. Wenn der Fachmann dennoch von außen keinerlei Stufe sieht, kann er aber bei Beachtung der zuletzt erwähnten Ausgestaltung feststellen, daß zwar eine Stufe vorhanden ist, daß diese aber (im Bereich der Siegelnaht) auf der Innenseite der Packung zu liegen kommt und daß der Betrachter von außen hiervon keine Kenntnis nimmt.

Gerade bei Siegelnähten mit überlappenden Rändern hatte der Fachmann bislang häufig Schwierigkeiten, Toleranzen einzuhalten, insbesondere die Breite des Überlappungsbereiches, welche vorgegebene Toleranzen nicht überschreiten durfte. Dadurch haben sich die Werkzeuge häufig kompliziert, zumal beim Anspritzen und den dabei auftretenden hohen Drücken zusätzlich eine Bewegung der Formhälften hinzukam. Dennoch mußten die Toleranzen eingehalten werden, um die jeweilige gespritzte Naht wirklich flüssigkeitsdicht zu bekommen.

Es muß dem Verdienst der Erfindung hier ein besonderer Vorteil zugeschrieben werden, daß nämlich diese Toleranzen bei Beachtung der erfindungsgemäßen Maßnahmen nicht mehr eingehalten zu werden brauchen. Der Betrachter einer Packung kann an dieser von außen die Breite eines Überlappungsbereiches nicht feststellen. Auch für die Dichtigkeit ist gesorgt, denn erfindungsgemäß kann eine Stufe oder ein Spritzwulst auf der dem Packungsinneren zugewandten Seite der Siegelnaht angeordnet verbleiben.

Wenn nach einer weiteren Ausgestaltung der Erfindung vorgesehen wird, daß die Siegelnaht im Trennbereich zwischen einem Wandungseinsatz und einer Seitenwand und/oder dem Deckel und/oder dem Boden angeordnet ist, dann versteht der Fachmann sogleich, daß selbst bei ziemlich komplexen Gestaltungen einer Packung, in deren Wandungen nämlich Einsätze unterschiedlicher Gestaltung angeordnet werden können, die Verbindungsnähte zwischen den Einsätzen und der Packungswandung mit den gleichen Vorteilen ausgestattet werden können. Mit anderen Worten kann auch die Siegelnaht zwischen einem beliebig gestalteten Wandungseinsatz und der betreffenden Packungswandung außen glatt und ohne Stufe ausgebildet sein. Die vorgenannten Maßnahmen können mit Vorteil also bei Siegelnähten mit überlappenden Rändern angewendet werden.

Die oben genannten Vorteile der neuen Verpackung erreicht man hinsichtlich des Verfahrens zur Herstellung einer Verpackung für fließfähige Füllgüter, insbesondere Milch, Säfte oder dergleichen, bestehend aus Seitenwänden sowie Ober- und Unterwand als Deckel und Boden, wobei wenigstens eine Seitenwand und/oder Deckel und/oder Boden eine längs Rändern benachbarter Wandfelder verlaufende Siegelnaht aufweist dadurch, daß die Ränder benachbarter Wandfelder überlappend aufeinandergelegt und einen einseitig glatten und auf der anderen Seite im Bereich der Überlappung mit einer Nut versehenen Formraum eingeschlossen werden, Kunststoff mit hohem Druck von der auf der Innenseite der Verpackung befindlichen Oberfläche her an die Siegelnaht gespritzt wird und ein Wulst aus Kunststoff längs der Siegelnaht gebildet wird.

Gerade dieser Kunststoffwulst sorgt nicht nur für die Dichtigkeit sondern auch für die mechanische Festigkeit der Siegelnaht, und gleichwohl ist von außen der Wulst nicht sichtbar, sondern die Oberfläche erscheint dem Betrachter glatt und gleichmäßig. Es ist bekannt, an wenigstens auf einer Oberfläche mit Kunststoff beschichtetes Papier Formen aus Kunststoff anzuspritzen, sei es einen vollständigen Deckel, einen Boden, beides oder sei es nur eine Stumpfschweißnaht oder dergleichen. Mit der erfindungsgemäßen Idee wird der Kunststoffwulst, sozusagen als Hauptteil der Siegelnaht, von innen auf den Randbereich zur Bildung und Unterstützung der Siegelnaht aufgespritzt. Gerade durch den hohen Druck, z.B. durch eine Klemmkraft von etwa 6 Tonnen zwischen den einzelnen Formteilen, wird das Querschnittsprofil der Siegelnaht so verändert, daß selbst bei überlappenden Rändern die Stufe zur Innenfläche hin verlegt wird, so daß die Oberfläche außen in der gewünschten Weise glatt wird.

Gerade um das gewünschte Querschnittsprofil zu beeinflussen, ist die Vorrichtung zur Herstellung einer Verpackung ähnlich der vorbeschriebenen Art, welche zwei relativ zueinander bewegbare Spritzbacken hat, dadurch gekennzeichnet, daß der erste, an der äußeren Oberfläche der Packung liegende Außenspritzbacken im Bereich der Siegelnaht eine glatte Oberfläche hat und daß der zweite, auf der Innenseite der Packungswand anbringbare Innenspritzbacken eine längs der Siegelnaht der Packungswand verlaufende und mit einer Einspritzöffnung verbundene Nut aufweist. Durch diese Ausgestaltung des Werkzeuges zwingt der Benutzer desselben die Packungswände einerseits und den mit hohem Druck eingespritzten Kunststoff andererseits dazu, eine außen glatte Oberfläche im Bereich der Verbindungsnaht vorzusehen, während durch die Nut auf der Innenseite der gewünschte Kunststoffwulst längs der Siegelnaht auf der Innenseite der Packung gebildet wird.

Weitere Vorteile, vorteilhafte Merkmale und Anwendungsmöglichkeiten der vorliegenden Erfindung ergeben sich aus der folgenden Beschreibung bevorzugter Ausführungsbeispiele in Verbindung mit den anliegenden Zeichnungen. Dabei zeigen:
- Figur 1: perspektivisch eine quaderförmige Packung mit Quer- und Längssiegelnaht,
- Figur 2: eine Querschnittsansicht der Längssiegelnaht entlang der inne II-II der Figur 1,
- Figur 3: eine anders ausgestaltete Flüssigkeitspackung mit tubusförmig gebildeten Seitenwänden, wobei der Deckel aus vier eingefalteten Wandfeldteilen gebildet ist, die durch eingespritzte Brücken aus Kunststoff miteinander verbunden sind,
- Figur 4: eine dritte andere Ausführungsform einer Packung mit tubusförmigen Seitenwänden, wobei der Querschnitt des Tubus im Bereich des Bodens viereckig und im Bereich des Deckels rund ist,
- Figur 5: eine ringförmige Papierwandung mit einem zentralen Loch,
- Figur 6: einen kegelstumpfförmigen Papierkörper mit unten angesetztem, überlappendem Rand zum Einsetzen in das Loch der Wandungsringfläche gemäß Figur 5,
- Figur 7: eine Wandung einer Packung mit einem angeschweißten Wandeinsatz,
- Figur 8: perspektivisch den Wandungseinsatz vor dem Einsetzen und Verbinden der Verpackungswand,
- Figur 9: den aufgeklappten und auseinandergefalteten Zuschnitt des Wandungseinsatzes der Figur 8,
- Figur 10: die Unteransicht auf den Mittelteil der Fläche der Figur 7 mit angespritztem Wandungseinsatz,
- Figur 11: abgebrochen und schematisch eine Querschnittsansicht entlang der Linie XI-XI der Figur 7,
- Figur 12: eine abgebrochene Querschnittsansicht ähnlich der in Figur 2, wobei die Siegelnaht jedoch erfindungsgemäß ausgestaltet ist,
- Figur 13: die Außenspritzbacken mit glatter Oberfläche, dazwischen angeordnete Siegelnaht mit überlappenden Rändern und der Innenspritzbacken, alle Teile abgebrochen und schematisch im Querschnitt, vor dem Spritzvorgang, und
- Figur 14: die Siegelnaht mit überlappenden Rändern nach dem Spritzvorgang in der erfindungsgemäß ausgestalteten Form mit außen ebener Oberfläche.

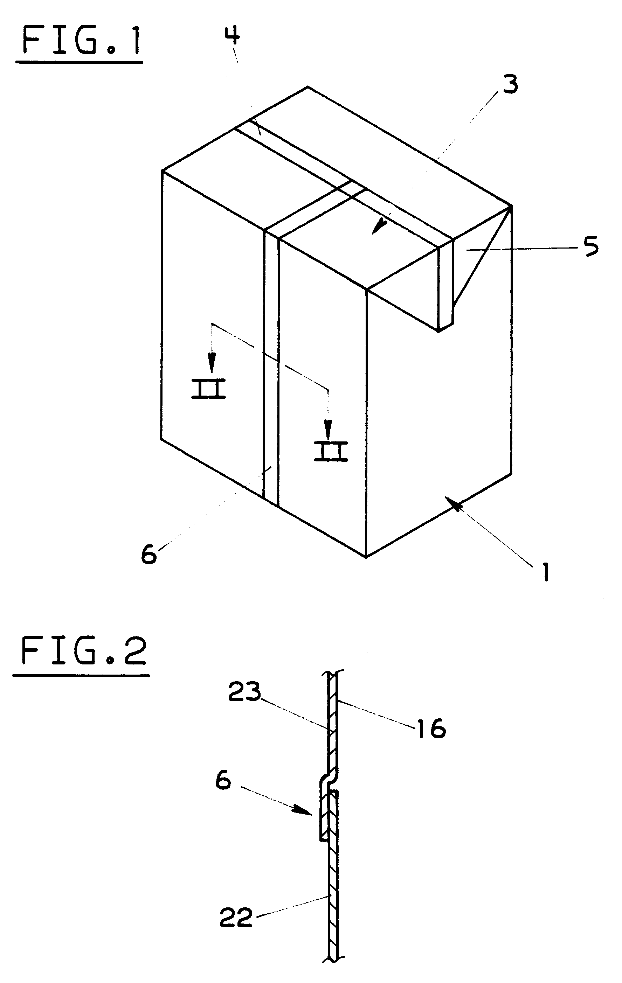

In den Figuren 1, 3 und 4 sind drei verschiedene Ausführungsformen von Verpackung für Milch dargestellt, die jeweils Seitenwände 1, 2, einen nicht näher bezeichneten Boden und einen Deckel 3 haben.

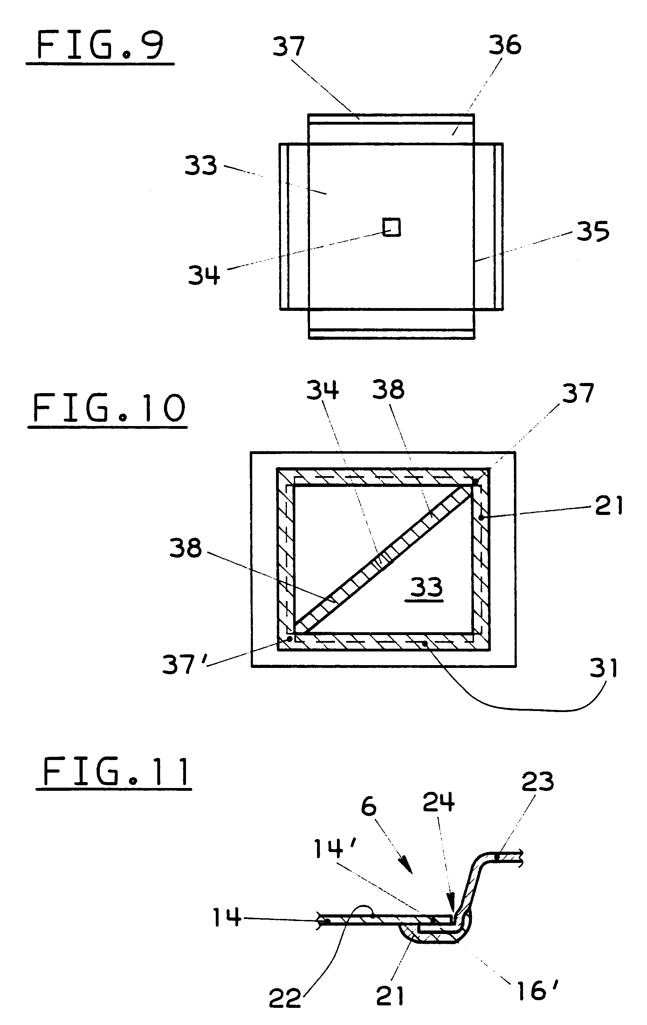

Bei der Ausführungsform der Figur 1 handelt es sich um eine quaderförmige Packung, bei welcher der Deckel durch Versiegeln entlang einer Quersiegelnaht 4 und Herunterfalten von dreieckförmigen Endlappen 5 gebildet ist. Die bei dieser Ausführungsform interessante Siegelnaht ist mit 6 bezeichnet und ist die sogenannte Längssiegelnaht, deren Querschnittsprofil entlang dem Schnitt nach der Linie II-II in Figur 1 abgebrochen in Figur 2 wiedergegeben ist. Diese insgesamt mit 6 bezeichnete Siegelnaht findet sich auch bei anderen Ausführungsformen wieder, insbesondere in den Figuren 11 bis 12 und 14.

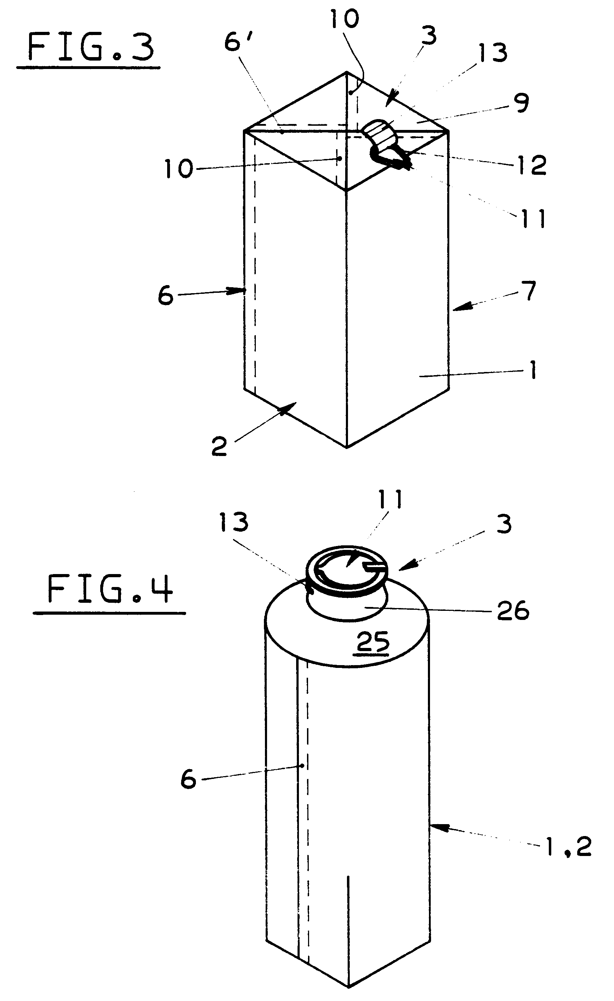

Bei der Ausführungsform der Figur 3 liegt die Siegelnaht längs des allgemein mit 7 bezeichneten Tubus in einer seiner vier Kanten, während bei der Ausführungsform der Figur 4 die Längssiegelnaht sich vom viereckigen Boden bis zum runden Deckel erstreckt.

Der Deckel 3 bei der Ausführungsform der Figur 3 ist aus vier dreieckförmigen Wandfeldern gebildet, von denen nur die Felder 8 und 9 besonders bezeichnet sind. Sie werden durch einen jeweils überlappenden Rand 10 längs kreuzförmig verlaufender Siegelnähte 6' verbunden. Das eine dreieckförmige Wandfeld 8 weist die allgemein mit 11 bezeichnete Öffnungsvorrichtung auf, welche eine Ausgießtülle 12 und bei dieser besonderen Ausführungsform ein Anlenkscharnier 13 aufweist.

Weder die Öffnungsvorrichtung 11 nach Figur 3 noch die nach der Figur 4 ist Gegenstand der nachfolgenden Beschreibung. Es soll hier lediglich erwähnt sein, daß beide Öffnungsvorrichtungen 11 ganz aus Kunststoff gespritzt sind.

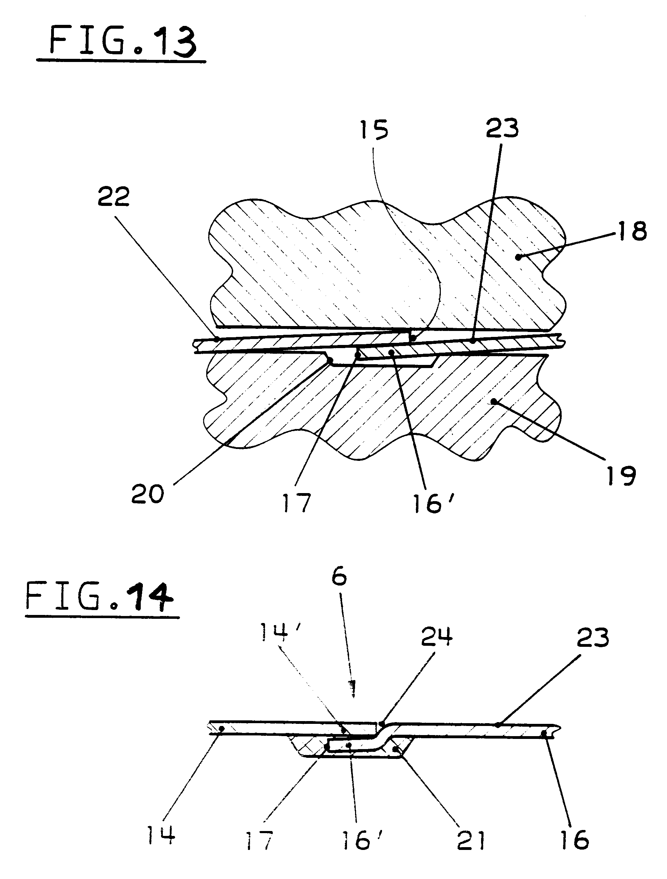

Für das Verständnis der Erfindung wird anhand der Querschnittsdarstellungen der Siegelnaht auf die eine Ausführungsform nach den Figuren 11 und 14 besonders Bezug genommen. Das eine Wandfeld 14 mit dem ihm zugeordneten Rand 14' ist bei dieser Siegelnaht mit überlappenden Rändern die erste Wand mit dem ersten äußeren überlappenden Rand 14'. Dieser Rand 14' endet in der Endkante 15. Die gegenüberliegende zweite Wand heißt 16 und weist den zweiten inneren Rand 16' auf, der ebenfalls eine Endkante 17 hat.

Der Zustand vor der Ausbildung der Siegelnant 6 ist in Figur 13 gezeigt, wo die beiden überlappenden Ränder 14' und 16' zwischen dem oben liegenden Außenspritzbacken 18 und dem unter den Wandungen 14 und 16 liegenden Innenspritzbacken 19 angeordnet ist, welcher im Bereich der zu bildenden Siegelnaht 6 eine Nut 20 hat. Diese ist mit einer hier nicht gezeigten Einspritzöffnung verbunden, durch welche im Betrieb der Kunststoff mit hohem Druck so eingespritzt wird, daß die Ränder 14' und 16' zwar etwas zusammengedrückt werden, die nicht ganz vermeidbare Stufe aber von der Nut 20 aufgenommen wird, die sich ganz mit Kunststoff füllt und damit den Kunststoffwulst 21 bildet. Damit befindet sich ein etwa aus der Gesamtinnenoberfläche herausstehendes, erhabenes Band lediglich auf der dem Packungsinneren zugewandten Seite der Wandungen 14, 16, während sowohl die Oberfläche 22 der einen Wand 14 als auch die äußere Oberfläche 23 der anderen Wand 16 im Querschnitt bündig und stetig ineinanderübergehen. Lediglich der kaum sichtbare Spalt 24 neben der Endkante 15 des zum Wandfeld 14 gehörenden Randes 14' bleibt sichtbar.

Bei der Ausführungsform mit den überlappenden Rändern gemaß der Querschnittsdarstellung der Figuren 11, 13 und 14 umläuft der innere, zu dem rechten Wandfeld 16 gehörende Rand 16' die Endkante 15 des äußeren Randes 14' stufenförmig gebogen. Das ganze wird von dem Kunststoffwulst 21 umgeben, welcher sich längs der Siegelnaht 6 erstreckt, d.h. längs des Spaltes 24, längs der Endkanten 15, 17 und längs der Ränder 14', 16'.

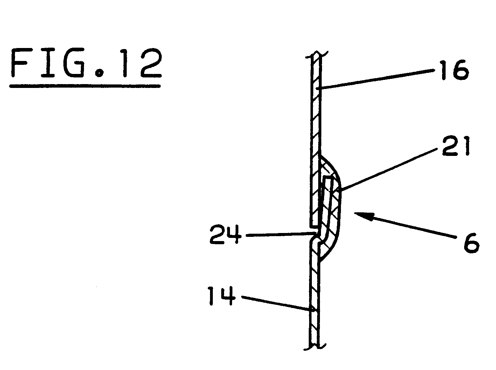

In Figur 2 ist die Querschnittsgestalt einer überlappenden Siegelnaht 6 bei einer herkömmlichen Verpackung gemäß Figur 1 gezeigt, und man erkennt dort die sogar auf die erste äußere Oberfläche 22, 23 hinausragende erhabene Naht 6. Direkt daneben ist die Querschnittsdarstellung der Figur 12 gezeigt, weil diese für die ebene Seitenfläche 2 der Packung erfindungsgemäß gebildet ist. Vergrößert ist der Nahtbereich in Figur 14 dargestellt und vorstehend beschrieben. Entsprechend sieht man in Figur 12 den Kunststoffwulst 21 auf der rechten Seite, welche später die dem Packungsinneren zugewandte Fläche der Wände 14 und 16 darstellt. Außer dem schmalen Spalt 24 kann der Betrachter der Packung nach Figur 1 von der Siegelnaht 6 nichts weiter feststellen, wenn diese erfindungsgemäß gebildet ist.

Beim Tubus 7 der Packung nach der Ausführungsform der Figur 3 liegt die überlappende Siegelnaht 6 in der Kante des im Querschnitt viereckigen Tubus 7. Vorzugsweise ordnet man den beschriebenen Spalt 24 direkt neben der Längskante des Tubus 7 an.

Betrachtet man die Verpackung nach Figur 4, dann liegt der untere Teil der Siegelnaht 6 überwiegend in einer Ebene, während der obere Teil in der Nähe des Deckels 3 überwiegend in einer gekrümmten Fläche liegt.

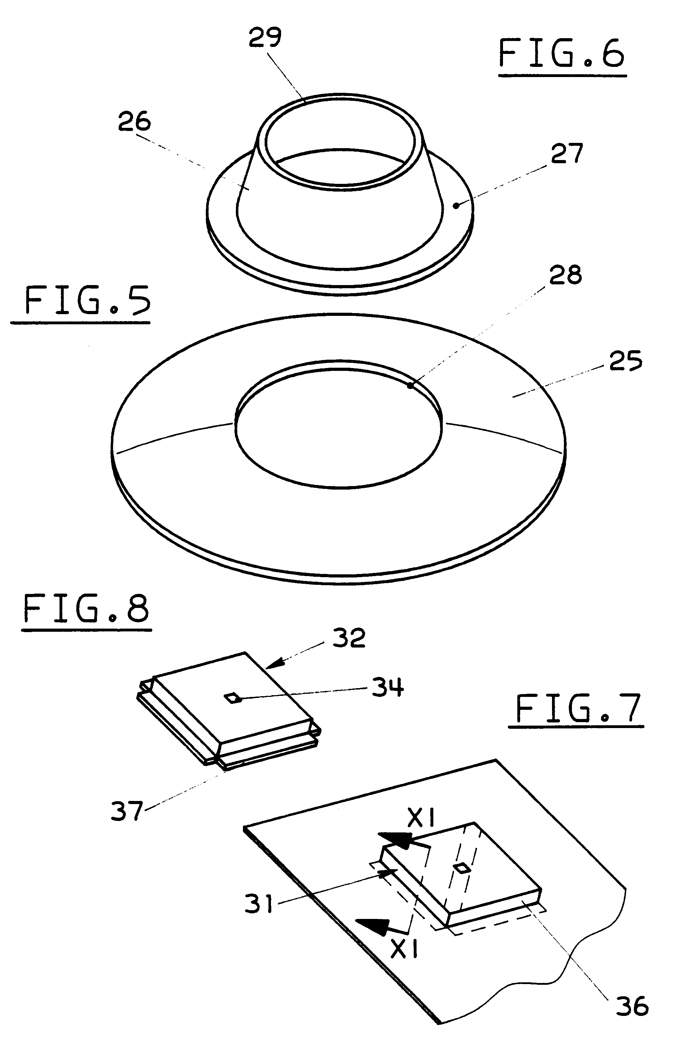

Die insoweit beschriebenen erfindungsgemäßen Maßnahmen erlauben die Gestaltung komplexer Körper, wie z.B. den Deckel 3 der Verpackung nach Figur 4. In diesem Falle soll das ringförmige Wandfeld 25 gemäß Figur 5 den unteren Teil des Deckels 3 darstellen, und der Kegelstumpf 26 ist ebenfalls aus mit Kunststoff an der Oberfläche beschichtetem Papier hergestellt und wird über die Klebelasche 27 im Loch 28 am Wandfeld 25 über eine Siegelnaht 6 verbunden, die im Querschnitt dann letztlich wie gemäß Figur 11 aussieht. Am oberen Rand 29 könnte dann die Öffnungsvorrichtung 11 aus Kunststoff angespritzt werden. Selbstverständlich ist in der Praxis dieser Aufbau zu kompliziert, er ist hier aber zur Veranschaulichung der erfindungsgemäßen Lösungen gewählt.

Eine letzte andere Ausführungsform der Erfindung ist in den Figuren 7 bis 10 dargestellt.

Eine ebene Wandung 30 weist ein quadratisches Loch 31 auf, in welches ein Wandungseinsatz 32 eingefügt und über eine Siegelnaht 6 verbunden werden soll, wie sie im Querschnitt etwa in Figur 11 dargestellt ist. Im aufgefalteten Zustand sieht der Wandungseinsatz 32 gemäß Darstellung der Figur 9 aus. Ein Deckelwandfeld 33 mit einer zentralen Öffnung 34 ist längs seinen vier geraden Kanten 35 mit schmalen Wandungen 36 versehen, die auf ihrer Außenseite jeweils eine Verbindungslasche 37 tragen. Diese entspricht etwa dem Rand 16' bei der Darstellung der Figur 11. Faltet man diesen Zuschnitt der Figur 9 zu dem räumlichen Gegenstand der Figur 8, dann braucht man ihn lediglich von unterhalb des Wandfeldes 30 in Figur 7 durch das Loch 31 nach oben hindurchzustecken, um die Anordnung der Figur 7 zu erhalten.

Dreht man das Wandfeld 30 auf den Kopf, dann sieht man die Darstellung der Figur 10 mit dem außen etwas verkleinert dargestellten Wandfeld 30 und dem Loch 31, welches sich durch die gestrichelte Linie darstellt. Von innen blickt man auf den quadratischen Boden 33 des Wandungseinsatzes 32 und auf den Kunststoffwulst 21, welcher die längs einem Viereck bandförmig umlaufende Verbindungsnaht darstellt. Der zur Bildung dieses Kunststoffwulstes 21 notwendige Kunststoff fließt zentral durch das Loch 34 über Verbindungskanäle in dem hier nicht dargestellten Werkzeug (Nuten) so in die Ecken 37, 37', daß sich die dazwischen diagonal erstreckenden Spelsewulste 38 ergeben. Funktionell ist lediglich der viereckig verlaufende, rahmenförmig in Figur 10 erscheinende Kunststoffwulst 21, welcher in seiner Querschnittsdarstellung gemäß Figur 11 sowohl die gestrichelte Linie 31 aus auch den überlappenden Rand 37 entsprechend dem Rand 16' der Figur 11 übergreift.

## Patentansprüche

1. Verpackung für fließfähige Füllgüter, insbesondere Milch, Säfte oder dergleichen, bestehend aus Seitenwänden (1, 2) sowie Ober- (3) und Unterwand als Deckel (3) und Boden, wobei wenigstens eine Seitenwand (1, 2) und/oder Deckel (3) und/oder Boden eine längs Rändern (14', 16') benachbarter Wandfelder (14, 16) verlaufende Siegelnaht (6, 6') aufweist, dadurch gekennzeichnet, daß die Siegelnaht (6) durch überlappend liegende Ränder (14', 16') gebildet ist und die äußere Oberfläche (22, 23) der Wand (14, 16, 3) mit der Siegelnaht (6, 6') glatt derart ausgebildet ist, daß die Oberflächen (22, 23) beider nebeneinanderliegender, durch die Siegelnaht (6, 6') miteinander verbundener Wandfelder (14, 16) über einen Spalt (24) neben einer Endkante (15) eines zu einem der Wandfelder (14) gehörenden Randes (14') hinweg im Querschnitt bündig ineinander übergehend angeordnet sind, daß eine Stufe durch die überlappenden Ränder (14', 16') im Bereich der Siegelnaht (6) auf der Innenseite der Packung angeordnet ist, und daß die Siegelnaht (6, 6') auf der Innenseite der Packung von einem angespritzten Kunststoffwulst (21) abgedeckt ist.

2. Verpackung nach Anspruch 1, dadurch gekennzeichnet, daß die Siegelnaht (6, 6') im Trennbereich zwischen einem Wandungseinsatz (26, 32) und einer Seitenwand (25, 30) und/oder dem Deckel (3) und/oder dem Boden angeordnet ist.

3. Verfahren zur Herstellung einer Verpackung für fließfähige Füllgüter, insbesondere Milch, Säfte oder dergleichen, bestehend aus Seitenwänden (1, 2) sowie Ober- (3) und Unterwand als Deckel (3) und Boden, wobei wenigstens eine Seitenwand (1, 2) und/oder Deckel (3) und/oder Boden eine längs Rändern (14', 16') benachbarter Wandfelder (14, 16) verlaufende Siegelnaht (6, 6') aufweist, dadurch gekennzeichnet, daß die Ränder (14', 16') benachbarter Wandfelder (14, 16) überlappend aufeinandergelegt und in einen einseitig glatten und auf der anderen Seite im Bereich der Überlappung mit einer Nut versehenen Formraum eingeschlossen werden, Kunststoff mit hohem Druck von der auf der Innenseite der Verpackung befindlichen Oberfläche her an die Siegelnaht (6, 6') gespritzt wird und ein Wulst (21) aus Kunststoff längs der Siegelnaht (6, 6') gebildet wird.

4. Vorrichtung zur Herstellung einer Verpackung für fließfähige Füllgüter, insbesondere Milch, Säfte oder dergleichen, bestehend aus Seitenwänden (1, 2) sowie Ober- (3) und Unterwand als Deckel (3) und Boden, wobei wenigstens eine Seitenwand (1, 2) und/oder Deckel (3) und/oder Bodeneine längs Rändern (14', 16') benachbarter Wandfelder (14, 16) verlaufende Siegelnaht (6, 6') aufweist, mit zwei relativ zueinander bewegbaren Spritzbacken (18, 19), dadurch gekennzeichnet, daß der erste, an der äußeren Oberfläche (22, 23) der Packung liegende Außenspritzbacken (18) im Bereich der Siegelnaht (6) eine glatte Oberfläche hat und daß der zweite, auf der Innenseite der Packungswand (14, 16) anbringbare Innenspritzbacken (19) eine längs der Siegelnaht (6) der Packungswand (14, 16) verlaufende und mit einer Einspritzöffnung verbundene Nut (20) aufweist.

## Claims

1. A pack for flowable contents, particularly milk, juices, or the like, consisting of side walls (1, 2) and also a top wall (3) and a bottom wall in the form of a top (3) and a bottom, wherein at least one side wall (1, 2) and/or top (3) and/or bottom has a sealing seam (6, 6') which extends along the edges (14', 16') of adjacent wall zones (14, 16), characterised in that the sealing seam (6) is formed by overlapping edges (14', 16') and the outer surface (22, 23) of the wall (14, 16, 3) with the sealing seam (6, 6') is designed smooth in such a way that adjacent to an end edge (15) of an edge (14') which belongs to one of the wall zones (14), the surfaces (22, 23) of the two wall zones (14, 16) joined together by the sealing seam (6, 6') are arranged so that the transition which they make into each other over a gap (24) forms a straight line ill cross-section, that a step is arranged through the overlapping edges (14', 16') in the region of the sealing seam (6) on the inside of the pack, and that the sealing seam (6, 6') is covered over on the inside of the pack with a plastics bead (21) which is injected onto it.

2. A pack according to Claim 1, characterised in that the sealing seam (6, 6') is arranged in the dividing region between a wall insert (26, 32) and a side wall (25, 30) and/or between the top (3) and/or the bottom.

3. A method for the manufacture of a pack for flowable contents, particularly milk, juices, or the like, the pack consisting of side walls (1, 2) and a top wall (3) and a bottom wall in the form of a top (3) and bottom, wherein at least one side wall (1, 2) and/or top (3) and/or bottom has a sealing seam (6, 6') which extends along the edges (14', 16') of adjacent wall zones (14, 16), characterised in that the edges (14', 16') of adjacent wall zones (14, 16) are placed over each other so that they overlap and are let into a shaping chamber which is smooth on one side and which is provided with a groove on the other side in the region of the overlap, and plastics material is injected at high pressure onto the sealing seam (6, 6') from the surface disposed to the inside of the pack, and a plastics bead (21) is formed along the sealing seam (6, 6').

4. An apparatus for the manufacture a pack for flowable contents, particularly milk, juices, or the like, consisting of side walls (1, 2) and a top wall (3) and bottom wall in the form of a top (3) and a bottom, wherein at least one side wall (1, 2) and/or top (3) and/or bottom has a sealing seam (6, 6') which extends along edges (14', 16') of adjacent wall zones (14, 16), having two injection jaws (18, 19) which are movable relative to each other, characterised in that the first outer injection jaw (18) placed on the outer surface (22, 23) of the pack has a smooth surface, and that the second inner injection jaw (19) which can be placed on the inside of the pack wall (14, 16) has a groove (20) which extends along the sealing seam (6) of the pack wall (14, 16) and which communicates with an injection opening.

## Revendications

1. Emballage pour des produits de remplissage aptes à s'écouler, notamment du lait, des jus ou analogues, constitué par des parois latérales (1,2) ainsi qu'une paroi supérieure (3) et une paroi inférieure, qui constituent un couvercle (3) et un fond, au moins une paroi latérale (1,2) et/ou un couvercle et/ou un fond présentant un joint de scellement (6,6'), qui s'étend le long de bords (14', 16') d'éléments de paroi voisins (14,16), caractérisé en ce que le joint de scellement (6) est formé par des bords (14', 16'), qui se chevauchent, et la surface extérieure (22,23) de la paroi (14,16,3) comportant le joint de scellement (6,6') est réalisée lisse de telle sorte, que les surfaces (22,23) des deux éléments de paroi (14,16), qui sont juxtaposés et reliés entre eux par le joint de scellement (6,6'), sont agencées de manière à se prolonger l'une dans l'autre de niveau en coupe transversale, par l'intermédiaire d'une fente (24), à côté d'une arête d'extrémité (15) d'un bord (14') associé à l'un des éléments de paroi (14), en ce qu'une partie étagée formée par les bords en chevauchement (14',16') est agencée, au voisinage du joint de scellement (6) sur le côté intérieur de l'emballage et en ce que le joint de scellement (6, 6') est recouvert, sur le côté intérieur de l'emballage, par un bourrelet en matière synthétique (21) formé par moulage par injection.

2. Emballage selon la revendication 1, caractérisé en ce que le joint de scellement (6,6') est agencé dans la zone de séparation entre un insert de paroi (26,32) et une paroi latérale (25,30) et/ou le couvercle (3) et/ou le fond.

3. Procédé pour la réalisation d'un emballage pour des produits de remplissage aptes à s'écouler, notamment du lait, des jus ou analogues, constitué par des parois latérales (1,2) ainsi qu'une paroi supérieure (3) et une paroi inférieure, qui constituent un couvercle (3) et un fond, au moins une paroi latérale (1,2) et/ou un couvercle et/ou un fond présentant un joint de scellement (6,6'), qui s'étend le long de bords (14', 16') d'éléments de paroi voisins (14,16), caractérisé en ce qu'on superpose en chevauchement les bords (14',16') d'éléments de paroi voisins (14,16) et qu'on les enferme dans un espace de moulage d'un côté lisse et dont l'autre côté est pourvu d'une rainure dans la zone du chevauchement, qu'on injecte sous pression élevée de la matière plastique au joint de scellement (6,6'), à partir de la surface située sur le côté intérieur de l'emballage, et qu'on forme un bourrelet (21) en matière plastique le long du joint de scellement (6,6').

4. Dispositif pour la réalisation d'un emballage pour des produits de remplissage aptes à s'écouler, notamment du lait, des jus ou analogues, constitué par des parois latérales (1,2) ainsi qu'une paroi supérieure (3) et une paroi inférieure, qui constituent un couvercle (3) et un fond, au moins une paroi latérale (1,2) et/ou un couvercle (3) et/ou un fond présentant un joint de scellement (6,6'), qui s'étend le long de bords (14', 16') d'éléments de paroi voisins (14,16), avec deux mâchoires de moulage par injection (18,19) mobiles l'une par rapport à l'autre, caractérisé en ce que la première mâchoire extérieure de moulage par injection (18), qui est située à la surface extérieure (22,23) de l'emballage, a une surface lisse dans la zone du joint de scellement (6), et que la seconde mâchoire intérieure de moulage par injection (19), qui peut être adjointe sur le côté intérieur de la paroi d'emballage (14,16), présente une rainure (20), qui s'étend le long du joint de scellement (6) de la paroi (14,16) de l'emballage et est reliée avec une ouverture de moulage par injection.
